# EUROPÄISCHE PATENTSCHRIFT

(11) **EP 1 683 603 B1**
(45) Veröffentlichungstag und Bekanntmachung des Hinweises auf die Patenterteilung: **28.05.2008**
(21) Anmeldenummer: 06000153.4
(22) Anmeldetag: 05.01.2006
(51) Int. Cl.: B23Q 3/155

(54) **Vorrichtung zur Aufnahme und Erkennung von Werkzeugen für Bearbeitungsmaschinen**
A device for receiving and identifying tools for a machine-tool
Dispositif pour reçevoir et reconnaître les outils pour une machine-outil

(30) Priorität: 19.01.2005 DE 102005002884
(43) Veröffentlichungstag der Anmeldung: 26.07.2006
(73) Patentinhaber: Innovatec AG, 66482 Zweibrücken (DE)
(72) Erfinder: Henrich, Theo, 66339 Mandelbachtal (DE)
(74) Vertreter: Klein, Friedrich Jürgen

(56) Entgegenhaltungen:
- DE-A1- 3 639 578
- DE-A1- 3 819 210
- DE-A1- 4 116 487
- PATENT ABSTRACTS OF JAPAN Bd. 012, Nr. 302 (M-732), 17. August 1988 (1988-08-17) & JP 63 077627 A (TOSHIBA CORP), 7. April 1988 (1988-04-07)

## Beschreibung

Die Erfindung betrifft eine Vorrichtung zur Aufnahme und Erkennung von Werkzeugen für Bearbeitungsmaschinen entsprechend dem Oberbegriff des Patentanspruches 1.

Bei der Durchführung von Bearbeitungs-, Schraub- oder ähnlichen Arbeitsvorgängen ist es meist erforderlich, die einzelnen Arbeitsgänge in vorbestimmter Reihenfolge durchzuführen, wozu eine Mehrzahl von Werkzeugen unterschiedlicher Art und Größe benötigt wird, die vor und nach Durchführung ihres jeweiligen Arbeitsganges im Bereich der entsprechenden Maschinen in sogenannten Werkzeugmagazinen aufgenommen sind.

Die DE 41 16 487 offenbart eine Einrichtung mit einem mehrere Werkzeuge aufnehmenden Werkzeugmagazin, wobei die Werkzeuge in diesem in bestimmter festgelegter Anordnung aufgenommen werden und nur in bestimmter, beispielsweise durch einen Arbeitsplan festgelegten Reihenfolge dem Werkzeugmagazin entnommen werden. Bei der Rückführung der Werkzeuge in das Werkzeugmagazin müssen sie wieder an ihren ursprünglichen Platz innerhalb des Werkzeugmagazins zurück gebracht werden.
Hierzu weist das Werkzeugmagazin ein elektrisch arbeitendes, insbesondere mit einem Mikroprozessor ausgerüstetes elektronisches Steuerorgan auf, das über in den Aufnahmeplätzen vorhandene Tastschalter deren Füllzustand abtastet und in Abhängigkeit davon für die selbsttätige schrittweise Fortschaltung der Sperrmittel im Sinne der Freigabe des jeweils nächstfolgenden Aufnahmeplatzes sorgt. Hierbei wird durch das Steuerorgan der jedem Aufnahmeplatz zugeordnete Tastschalter bei Entnahme des entsprechenden Werkzeuges bzw des entsprechenden Werkzeughalters in eine Vorbereitungsphase gebracht, um beim anschließenden Wiedereinsetzen des der Bearbeitungsmaschine entnommenen Werkzeuges in den Aufnahmeplatz durch ein erneutes Ansprechen des gleichen Tastschalters das Sperrmittel des nächstfolgenden entnahmerichtigen Werkzeuges freizugeben.

Aus der DE 38 19 210 A1 ist es bekannt, die Werkzeuge einer NC-gesteuerten Maschine im Werkzeugmagazin in rein zufälliger Verteilung anzuordnen und im Griffbereich einer Handhabungseinrichtung eine mit der Maschinensteuerung verbundene bewegliche Codierungserkennungseinrichtung vorzusehen, die von der Handhabungseinrichtung in den Aufnahmeplätzen des Werkzeugmagazins entsprechende Lesepositionen verstellbar ist. Vor dem Wechseln der in dem Werkzeugmagazin vorhandenen Werkzeuge ergreift die Handhabungseinrichtung zunächst die Codierungserkennungseinrichtung und führt diese so über die Werkzeuge, daß deren Codierung gelesen werden kann. Die gelesenen Informationen werden der Steuerung der Maschine zugeführt, so daß diese die Anordnung der Werkzeuge innerhalb des Werkzeugmagazins kennt. Anschließend werden die für das nächste Arbeitsprogramm nicht benötigten Werkzeuge dem Werkzeugmagazin entnommenen und gegen die benötigten neuen Werkzeuge ausgetauscht. Nach Löschen der Codierung der entnommenen Werkzeuge im Speicher der Steuerung der Maschine wird die Codierung der neu in das Werkzeugmagazin eingebrachten Werkzeuge ebenfalls mittels der Codierungserkennungseinrichtung ausgelesen und die Positionen der einzelnen Werkzeuge innerhalb des Werkzeugmagazins ebenfalls der Steuerung der Maschine mitgeteilt. Obwohl im Werkzeugmagazin sowohl in Bezug auf die in diesem verbliebenen, als auch hinsichtlich der neu aufgenommen Werkzeuge eine regellose Zufallsverteilung besteht, vermag die Handhabungseinrichtung das jeweils zum Einsatz kommende Werkzeug, aufgrund der Kenntnis seiner Position innerhalb des Werkzeugmagazins diesem zu entnehmen, wobei aber Voraussetzung ist, daß das jeweils nicht mehr benötigte Werkzeug am Ende seines Arbeitsganges wieder an seine seitherige Position innerhalb des Werkzeugmagazins zurück gebracht ist, sodaß die Handhabungseinrichtung das Werkzeug unter Verwendung seiner der Steuerung der Maschine ursprünglich mitgeteilten Positionsdaten beliebig oft entnehmen und an den gleichen Aufnahmeplatz im Werkzeugmagazin zurück bringen kann.
Auf diese Weise können die Werkzeuge zwar in regelloser Zufallsverteilung aufgenommen werden, jedoch ist es hierzu erforderlich, daß einerseits die Positionsdaten eines jeden Werkzeuges zumindest zeitweise in der Steuerung der Maschine gespeichert werden, und das Werkzeug stets an den gleichen Aufnahmeplatz im Werkzeugmagazin zurück gebracht wird. Um die Einhaltung dieser Voraussetzung zu gewährleisten, ist es erforderlich, nicht nur die Entnahme des Werkzeuges aus dem Werkzeugmagazin, sondern auch dessen Rückführung in das Werkzeugmagazin absolut zuverlässig durchzuführen. Da zudem die für Codierungserkennungseinrichtungen vorgesehenen Codierungen der Werkzeuge im allgemeinen für den Werker nicht identifizierbar sind, ist eine Aufnahme von Werkzeugen in Werkzeugmagazinen mit regelloser Zufallsverteilung nur dann praxistauglich, wenn sowohl die Entnahme als auch die jeweilige Rückführung der Werkzeuge mittels einer gesteuerten Handhabungseinrichtung erfolgt.

Zur Erkennung der einzelnen Werkzeuge ist es durch den JP-Abstract zur JP-Veröffentlichug 63077627 bekannt, am Werkzeugträger oder am Werkzeug selbst eine Codierung anzubringen, die in den Werkzeugträger oder das Werkzeug eingebettet sein kann. Zur Erkennung eines Werkzeuges wird von einem Rechner ein entsprechendes Abfragesignal an ein Sende- Empfangsgerät gegeben, das über eine Antenne an das Werkzeug weitergeleitet wird. Das Sende- Empfangsgerät erhält dann ebenfalls über eine Antenne die Codierung des Werkzeuges und leitet diese an den Rechner weiter, der anhand der Codierung das Werkzeug erkennt.

Die DE 36 39 578 offenbart eine Informationsverarbeitungsapparatur für Werkzeughalter mit der bei einem einfachen Aufbau sowohl ein sicherer Datenaustausch als auch eine sichere Stromzufuhr sichergestellt werden soll.
Hierbei weist der Werkzeughalter einen Speicher zur Aufnahme spezifischer Informationen des an ihm befestigten Werkzeuges auf, wobei die Informationen über kontaktlose Kopplungsmittel an eine externe Einheit übertragbar sind und das Einschreiben und Auslesen der Daten durch optische oder magnetische Übertragung zwischen dem Speicher und der externen Einheit durch seriellen Datentransfer erfolgt.
Vorteil dieser Lösung soll sein, daß dann wenn an dem Werkzeughalter ein anderes Werkzeug befestigt wird, sich alle Daten des neuen Werkzeuges in den Speicher einschreiben lassen, sodaß stets der für ein bestimmtes Werkzeug geeignete Werkzeughalter verwendet werden kann.
Hierzu lassen sich unterschiedliche Werkzeuge an unterschiedlichen Werkzeughaltern befestigen. Da zudem nach dem Einsetzen eines neuen Werkzeuges in den Rahmen die im Werkzeughalter gespeicherte Information mittels einer Werkzeugwechselvorrichtung aus dem Rahmen ausgelesen wird, entfällt eine feste Zuordnung zwischen Werkzeug und Rahmen, sodaß das Werkzeug in jeden beliebigen leeren Rahmen eingesetzt werden kann.

In der Beschreibungseinleitung dieser Druckschrift ist eine Werkzeugwechselvorrichtung für ein Bearbeitungszentrum beschrieben, wonach beim erstmaligen Bestücken des Werkzeugmagazins zwischen den Werkzeugträgern und den Aufnahmeplätzen im Werkzeugmagazin eine sog. 1:1 Relation gebildet wird, d.h. jedem Werkzeugträger wird die Nummer seines Aufnahmeplatzes im Magazin zugeordnet. Hierdurch wird dann, wenn beispielsweise das Werkzeug mit der Nummer 5 gesucht wird, nicht der entsprechende Werkzeugträger mit der Nummer 5 gesucht wird, sondern dem Aufnahmeplatz mit der Nummer 5 der Werkzeugträger entnommenen wird. Dies erfordert, daß die Werkzeugträger nach Beendigung eines Arbeitsvorganges mit dem Werkzeug wieder an den ursprünglichen Aufnahmeplatz zurück gebracht wird. Wird der Werkzeugträger -aus welchen Gründen auch immer- nicht an den ursprünglichen Aufnahmeplatz zurück gebracht, sondern versehentlich an einem anderen Aufnahmeplatz im Werkzeugmagazin abgelegt, so ist die Steuerung nicht mehr in der Lage, diesen Werkzeugträger zu finden.
Hieraus ergibt sich, daß auch dann, wenn beispielsweise ein verschlissenes Werkzeug gegen ein neues Werkzeug ausgetauscht wird, der Werkzeugträger mit dem neuen Werkzeug an den früheren Aufnahmeplatz im Werkzeugmagazin abgelegt werden muß.

Diese Voraussetzungen sind zwar bei der Großserienfertigung mittels NC-gesteuerten Werkzeugmaschinen, bei denen die Rüstzeiten gegenüber den eigentlichen Laufzeiten der Maschine verschwindend gering sind, im allgemeinen gegeben, jedoch wäre die Schaffung dieser Voraussetzungen für den Bereich der Kleinserienfertigung mit häufig wechselnden Arbeitsprogrammen, wobei der Werker nach Beendigung eines Arbeitsvorganges das hierfür benutzte Werkzeug selbst in das Werkzeugmagazin zurück bringt und diesem das für den nächsten Arbeitsvorgang erforderliche Werkzeug entnimmt, im Hinblick auf die relativ große Verwechslungsgefahr unwirtschaftlich.

Der Erfindung liegt daher die Aufgabe zugrunde, eine gattungsgemäße Vorrichtung zu schaffen, die eine regellose Zufallsverteilung der Werkzeuge innerhalb des Werkzeugmagazins sowohl beim erstmaligen Einbringen der Werkzeuge in das Werkzeugmagazin, als auch beim Zurückführen der Werkzeuge nach ihrem jeweiligen Gebrauch zuläßt, dabei aber gleichwohl in der Lage ist, dem Werker das von der Steuerung der Maschine für den nächsten Arbeitsgang vorgesehene Werkzeug unabhängig von seiner momentanen Position innerhalb des Werkzeugmagazins kenntlich zu machen.

Diese Aufgabe wird bei einer gattungsgemäßen Einrichtung mit den im Patentanspruch 1 angegebenen Merkmalen gelöst.

Mit der Lehre der Erfindung, die Aufnahmeplätze des Werkzeugmagazins lediglich mit einer unverändert bleibenden Ordnungsnummer zu versehen, und sämtliche Aufnahmeplätze des Werkzeugmagazins bzw die Codierungen der in diesen aufgenommenen Werkzeuge mit einer sich wiederholenden Suchroutine ununterbrochen abzufragen und hierbei die Antennen der mit den jeweiligen Werkzeugen fest verbundenen Empfangs-Sendegeräte aufeinanderfolgend mit der Antenne eines einzigen Lesegerätes abzufragen und die ausgelesenen Informationsinhalte dem Rechner ständig "online" zum Vergleich mit der Codierung des für den jeweils nächsten Arbeitsvorgang zuzuführen, wird die Werkzeug-Codierung zur Ermittlung und Kenntlichmachung des momentanen Aufnahmeplatzes für das für den nächsten Arbeitsgang vorgesehene Werkzeug, sodaß es im Hinblick darauf, daß dem Rechner bekannt ist, welcher Aufnahmeplatz innerhalb einer Suchroutine gerade abgefragt wird, möglich ist, den Aufnahmeplatz eines jeden Werkzeuges ständig zu ändern, ohne daß es hierzu einer Information des Rechners oder gar einer Speicherung des jeweiligen Aufnahmeplatzes der Werkzeuge innerhalb des Werkzeugmagazins bedarf. Dies ermöglicht es dem Werker, jedes in das Werkzeugmagazin zurück zu bringende Werkzeug an jedem momentan freien Aufnahmeplatz abzulegen.

Hierbei ist es vorteilhaft, wenn die Wiederholungsfrequenz der sich ständig wiederholenden Suchroutine durch den Rechner gesteuert wird, sodaß dieser während der ständigen Wiederholung einer jeden Suchroutine auch während der Durchführung eines jeden Arbeitsganges erkennt, ob vom Werker während des entsprechenden Arbeitsganges ein unzulässiger Werkzeugtausch vorgenommen wurde.

Sofern der Werker für die Durchführung eines nächsten Arbeitsvorganges nicht das ihm vom Rechner für diesen Arbeitsgang angezeigte Werkzeug für den vorgesehenen Arbeitsgang entnommen hat, kann dies mit den im Anspruch 5 genannten Merkmalen sofort erkannt werden. Hat nämlich der Werker ein anderes als das vom Rechner vorgesehene Werkzeug dem Werkzeugmagazin entnommen, so zeigt sich dies schon innerhalb der ersten Kontrollroutine. Das Lesegerät führt, da das zur Entnahme vorgesehene Werkzeug im Werkzeugmagazin geblieben ist, dem Rechner schon während der ersten Kontrollroutine die Codierung des zur Entnahme vorgesehenen Werkzeuges zu, sodaß der Rechner beim Vergleich dieser Codierung mit der Codierung des von ihm zur Entnahme angezeigten Werkzeuges Über-einstimmung der Codierungsinhalte feststellt und damit erkennt, daß das von ihm zur Entnahme angezeigte Werkzeug sich noch im Werkzeugmagazin befindet. Hierdurch vermag der Rechner der Steuerung der Bearbeitungsmaschine eine Fehlermeldung anzuzeigen und gegebenenfalls deren Stillsetzung zu bewirken.

Der Werker hat zwar die Möglichkeit, das jeweils in das Werkzeugmagazin zurück zu legende Werkzeug an jedem freien Aufnahmeplatz abzulegen, jedoch ist er durch die im Anspruch 8 angegebenen Merkmale gezwungen, ein benutztes Werkzeug spätestens unmittelbar vor Beginn des mit einem anderen Werkzeug durchzuführenden Arbeitsganges in einem freien Aufnahmeplatz des Werkzeugmagazins abzulegen. Da somit sichergestellt ist, daß während eines Arbeitsganges außer dem für den jeweiligen Arbeitsgang vorgesehenen Werkzeug sich alle übrigen Werkzeuge im Werkzeugmagazin befinden und er damit nur das für den jeweiligen Arbeitsgang vorgesehene Werkzeug zur Verfügung hat, ist weitestgehend sichergestellt, daß der jeweilige Arbeitsgang auch mit dem hierfür vorgesehenen Werkzeug durchgeführt wird.

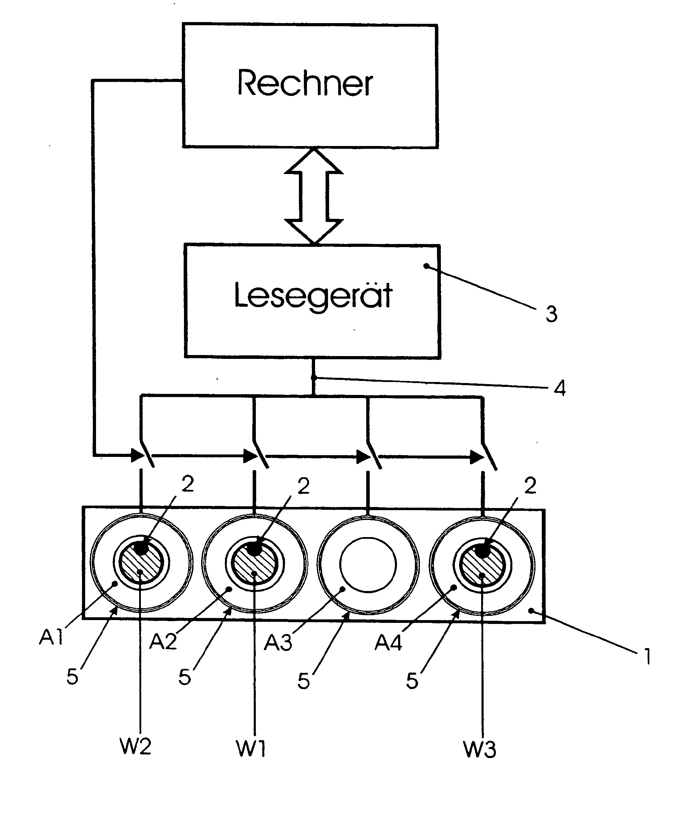

Weitere Vorteile und Einzelheiten der Erfindung ergeben sich aus den übrigen Unteransprüchen sowie aus der Aufbau- und Funktionsbeschreibung eines in der beigefügten Zeichnung in Prinzipdarstellung gezeigten Ausführungsbeispiels der Erfindung.

Für die Erläuterung des Erfindungsgegenstandes wird davon ausgegangen, daß es sich bei der mit Werkzeugen zu versorgenden Maschine um eine Werkzeug-Maschine oder um einen Verschraubungsautomaten handeln kann. Unabhängig davon, ob es sich um eine spanende Werkzeug-Maschine handelt, mit der an einem Werkstück mehrere Arbeitsgänge, beispielsweise mehrere Bohrungen mit unterschiedlichen Durchmessern in vorbestimmter Reihenfolge hergestellt werden, oder ob es sich um einen Verschraubungsautomaten handelt, mit dem mehrere Verschraubungsvorgänge mit unterschiedlichen Werkzeugen in vorbestimmter Reihenfolge durchgeführt werden, wird davon ausgegangen, daß für die Bestimmung der Einsatzfolge der einzelnen unterschiedlichen Werkzeuge ein zentraler Rechner -nachstehend nur "Rechner" genannt- vorgesehen ist.
Bei Verschraubungsautomaten sind im Rechner im allgemeinen mehrere unterschiedliche Verschraubungsprogramme abgelegt, sodaß dieser anhand eines ausgewählten Verschraubungsprogrammes die Einsatzfolge der unterschiedlichen Werkzeuge vorgibt.
Die für ein bestimmtes Verschraubungsprogramm erforderlichen Werkzeuge sind in einem Werkzeugmagazin 1 aufgenommen, und werden an dessen Aufnahmeplätzen A1, A2, A3 und A4 in zunächst regelloser Zufallsverteilung für die verschiedenen Arbeitsgänge bereitgehalten. Für die drei Werkzeuge würden an und für sich 3 Aufnahme-plätze ausreichen, jedoch sind beim gezeigten Ausührungsbeispiel der Erfindung zur anschaulicheren Darstellung der Flexibilität des Erfindungsgegenstandes insgesamt 4 Aufnahmeplätze vorgesehen, auf die die 3 Werkzeuge in beliebiger Anordnung verteilt sein können.
Jedes der im Werkzeugmagazin 1 aufgenommenen Werkzeuge ist mit einer Codierung versehen, die eine Unterscheidung der einzelnen Werkzeuge erlaubt.

Die Codierung der Werkzeuge ist in jeweils einem "Empfangs-Sendegerät" 2 aufgenommen, das nach dem "Abfrage-Antwort-System" arbeitet. Ein von dem Empfangs-Sendegerät 2 (das auch als "Antwortgeber" oder "Transponder" bezeichnet wird) empfangenes codiertes Abfragesignal wird vom Empfangs-Sendegerät 2 entschlüsselt und nach der Kennung und gegebenenfalls anderen Informationen des Abfragenden ausgewertet. Daraufhin wird automatisch ein codiertes, selektiv für den Abfragenden bestimmtes Antwortsignal mit den gewünschten Informationen ausgesendet, das beim Abfragenden von einem hierfür geeigneten Lesegerät 3 wiederum automatisch entschlüsselt und ausgewertet wird.
Jedes der Empfangs-Sendegeräte 2 weist einen Mikrochip zur Speicherung von Daten auf und kann in einer Ausnehmung des jeweiligen Werkzeuges eingegossen sein, sodaß es fest mit dem Werkzeug verbunden ist, ohne hierzu eine Formänderung am Werkzeug zu erfordern. Die Codierung kann im einfachsten Fall von einer Nummer gebildet sein, wodurch die Werkzeuge als Werkzeug W1, W2 und W3 voneinander unterscheidbar sind.
Die in den jeweiligen Empfangs-Sendegeräten 2 hinterlegten Nummern können aufeinanderfolgend durch das Lesegerät 3 ausgelesen werden. Hierzu weist das Lesegerät 3 einen Antennenanschluß 4 auf, die aufeinanderfolgend mit den Antennen 5 der Empfangs-Sendegeräte 2 der Werkzeuge W1, W2 und W3 zusammen geschaltet wird, wobei jedem der Aufnahmeplätze A1 bis A4 eine eigene Antenne 5 zugeordnet ist, die im unmittelbaren Bereich des jeweiligen Aufnahmeplatzes angeordnet ist. Beim gezeigten Ausführungsbeispiel sind die Antennen 5 kreisringförmig ausgebildet und an den Aufnahmeplätzen konzentrisch zu den im Werkzeugmagazin 1 aufgenommenen Werkzeugen W angeordnet.

Bei dem Empfangs-Sendegerät 2 sowie dem Lesegerät 3 handelt es sich um ein "Radio Frequence Identification System" (RFID), mit dem vom Lesegerät 3 mittels den Antennen 5 Energie in die Empfangs-Sendegeräte 2 übertragen wird. Diese Energie wird dann genutzt, den Speicher der Empfangs-Sendegeräte 2 auszulesen und die entsprechenden Daten mittels jeweils den Antennen 5 an das Lesegerät 3 zu übertragen. Die Datenübertragung vom Empfangs-Sendegerät 2 zum Lesegerät 3 erfolgt somit absolut berührungslos, sodaß kein elektrischer Kontakt erforderlich ist.

Nachdem sowohl die Empfangs-Sendegeräte 2, als auch das Lesegerät 3 handelsübliche Module -beispielsweise solche der Fa. Scemtec- sind, wird die Funktionsweise solcher Module vorausgesetzt, so daß sich eine detaillierte Beschreibung ihrer Wirkungsweise erübrigt.

Da für sämtliche Aufnahmeplätze nur ein einziges Lesegerät 3 vorgesehen ist und dieses mit nur einem einzigen Antennenanschluß 4 ausgestattet ist, wird das Lesegerät 3 für die Abfrage aller Empfangs-Sendegeräte 2 aufeinanderfolgend mit jeder der vier Antennen 5 verbunden, um nacheinander die Daten sämtlicher Empfangs-Sendegeräte 2 der drei vom Werkzeugmagazin 1 aufgenommenen Werkzeuge vom Lesegerät 3 auslesen und dem Rechner zuführen zu können. Dies geschieht wegen den relativ hohen Spannungen in der jeweiligen Antennenspule durch nicht näher dargestellte Relais.

Da das unmittelbar aufeinander folgende Abfragen sämtlicher Aufnahmeplätze ohne jegliche Bewegung sowohl des Werkzeugmagazins 1, als auch des Lesegerätes 3 erfolgt, und die Empfangs-Sendegeräte 2 berührungslos induktiv aktiviert und ausgelesen werden, liegt einerseits die für ein einmaliges Auslesen aller Empfangs-Sendegeräte 2 erforderliche Zeit im Milli-Sekunden-Bereich und andererseits erfolgt das Auslesen der Empfangs-Sendegeräte 2 ohne jeglichen mechanischen Verschleiß. Hierdurch wird es möglich, das unmittelbar aufeinander erfolgende Auslesen aller Empfangs-Sendegeräte 2 als ständige Such- oder Kontrollroutine durchzuführen.

Zur Vereinfachung der Darstellung der erfindungsgemäßen Funktion wird davon ausgegangen, daß aus der Vielzahl der im Rechner gespeicherten Schraubprogramme eines ausgewählt ist, wonach die Werkzeuge W in der Reihenfolge W1, W2 und W3 zum Einsatz kommen sollen. Ferner wird davon ausgegangen, daß das Werkzeugmagazin 1 insgesamt 4 Werkzeug-Aufnahmeplätze A1 bis A4 aufweist, und die für das ausgewählte Schraubprogramm benötigten Werkzeuge W1, W2 und W3 in einer regellosen Zufallsverteilung auf die 4 Aufnahmeplätze verteilt sind, wodurch sich folgende Ausgangssituation

Aufnahmeplatz A1 nimmt das Werkzeug W2 für den 2. Arbeitsgang auf; Aufnahmeplatz A2 nimmt das Werkzeug W1 für den 1. Arbeitsgang auf; Aufnahmeplatz A3 ist leer, und Aufnahmeplatz A4 nimmt das Werkzeug W3 für den 3. Arbeitsgang auf, ergibt, die hinsichtlich der Verteilung der Werkzeuge auf die einzelnen Aufnahmeplätze weder dem Werker, noch dem Rechner bekannt ist, und dieser lediglich die Reihenfolge des Einsatzes der Werkzeuge W1, W2 und W3 vorgibt.

Zum Auffinden des zuerst zum Einsatz kommenden Werkzeuges W1 wird im Rechner ein der Codierung des Werkzeuges W1 entsprechendes Signal S1 gesetzt. Gleichzeitig hierzu wird das Lesegerät 3 aktiviert, das nach Aktivierung der dem Aufnahmeplatz A1 zugeordneten Antenne 5 die Codierung des ersten Empfangs-Sendegerätes 2 und damit die Codierung des ersten der im Werkzeugmagazin 1 aufgenommenen Werkzeuge ausliest. Bei der angenommenen Ausgangssituation ist dies die Codierung des Werkzeuges W2. Die ausgelesene Information wird vom Lesegerät 3 an den Rechner weitergeleitet, der diese mit dem Inhalt des von ihm gesetzten Signals S1 vergleicht. Da der Inhalt der vom Lesegerät 3 an den Rechner geleiteten Information nicht mit dem Inhalt des für das Werkzeug W1 gesetzten Signals S1 übereinstimmt, erkennt der Rechner, daß das sich im Aufnahmeplatz A1 befindliche Werkzeug W2 nicht das von ihm geforderte Werkzeug W1 ist.

Anschließend wird das Lesegerät 3 durch den Rechner erneut aktiviert, wodurch jetzt die dem zweiten Aufnahmeplatz A2 zugeordnete Antenne 5 aktiviert wird, sodaß das Lesegerät 3 die Codierung des zweiten Empfangs-Sendegerätes 2 und damit die Codierung des zweiten der im Werkzeugmagazin 1 aufgenommenen Werkzeuge, nämlich die Codierung des Werkzeuges W1 ausliest und diese Information vom Lesegerät 3 an den Rechner gegeben wird, der nun diese mit dem Inhalt des von ihm gesetzten Signals S1 vergleicht. Da der Inhalt der beiden Signale übereinstimmt, erkennt der Rechner, daß die jetzt ausgelesene Codierung die Codierung des von ihm geforderten Werkzeuges W1 ist. Durch den Rechner wird hierdurch am Werkzeugmagazin 1 eine Kennung am Aufnahmeplatz A2 erzeugt, die dem Werker anzeigt, daß das für den ersten Arbeitsgang vorgesehene Werkzeug das sich im Aufnahmeplatz A2 befindliche Werkzeug W1 ist; gleichzeitig hierzu gibt der Rechner den Maschinenstart frei, sodaß der Werker das Werkzeug W1 entnehmen und den Arbeitsgang durchführen kann.

Obwohl damit das vom Rechner für den ersten Arbeitsgang geforderte Werkzeug gefunden ist, und der Werker den ersten Arbeitsgang einleiten und auch ausführen kann, werden dennoch aufeinanderfolgend die Codierungen der sich in den Aufnahmeplätzen A3 und A4 befindenden Werkzeuge durch das Lesegerät 3 ausgelesen, wobei zunächst die dem Aufnahmeplatz A3 zugeordnete Antenne 3 aktiviert wird. Hierdurch wird vom Lesegerät 3 versucht, die Codierung des vom Aufnahmeplatz A3 (vermutlich) aufgenommenen Werkzeuges auszulesen. Da sich im Aufnahmeplatz A3 aber kein Werkzeug und damit auch kein Empfangs-Sendegerät 2 befindet, wird vom Lesegerät 3 ein Leercode ausgelesen und an den Rechner übertragen. Der Vergleich der Information des vom Leercode erzeugten Signals mit dem im Rechner noch immer anstehenden Signal S1 für das Werkzeug W1, führt zu keiner Situationsveränderung, d.h. im Rechner bleibt weiterhin das der Codierung des Werkzeuges W1 entsprechende Signal S1 gesetzt.
Der Rechner erkennt dabei aber, daß der Aufnahmeplatz A3 nicht mit einem Werkzeug besetzt ist.

Schließlich wird das Lesegerät 3 durch den Rechner erneut aktiviert, wobei die dem Aufnahmeplatz A4 zugeordnete Antenne 5 aktiviert wird, sodaß die Codierung des dritten Empfangs-Sendegerätes 2 und somit die Codierung des dritten der im Magazin aufgenommenen Werkzeuge, nämlich die Codierung des Werkzeuges W3 ausgelesen und diese Information vom Lesegerät 3 an den Rechner gegeben wird. Das vom Inhalt der Codierung des Werkzeuges 3 abgeleitete Signal wird ebenfalls im Rechner mit dem noch immer gesetzten Signal S1 für das Werkzeug W1 verglichen, wodurch der Rechner erkennt, daß im Aufnahmeplatz A4 ein weiteres Werkzeug aufgenommen ist, dessen Codierung mit der Codierung des Werkzeuges W1 nicht übereinstimmt.

Nachdem die von den vorgenannten 4 Auslesevorgängen gebildete Suchroutine abgeschlossen ist, wird diese so lange aufeinanderfolgend wiederholt bis der Bearbeitungsvorgang beendet ist, sodaß die am Aufnahmeplatz A2 erzeugte Kennung bis zum Ende des ersten Arbeitsvorganges erhalten bleibt.

Vor der Durchführung des zweiten Arbeitsganges entnimmt der Werker der Arbeitsspindel der Maschine das Werkzeug W1 und legt dieses in das Werkzeugmagazin 1 zurück; anschließend wird er dem Werkzeugmagazin 1 das Werkzeug W2 entnehmen. Bei der gewählten Ausgangssituation hat der Werker die Möglichkeit, das Werkzeug W1 entweder an seine ursprüngliche Stelle im Werkzeugmagazin 1, nämlich an den Aufnahmeplatz A2 oder aber an den seither leergebliebenen Aufnahmeplatz A3 zurück zu bringen.
Unabhängig davon, an welchem Aufnahmeplatz der Werker das Werkzeug W1 ablegt hat, setzt der Rechner ein der Codierung des Werkzeuges W2 entsprechendes Signal S2, mit dem die aus dem wiederum aufeinanderfolgenden Auslesen aller Empfangs-Sendegeräte 2 die Codierungen aller Werkzeuge W1, W2 und W3 gewonnenen Signale verglichen werden, d.h. die vorbeschriebene Suchroutine wird in vollem Umfang ständig wiederholt.
Da sich das Werkzeug W2 im Aufnahmeplatz A1 befindet, ist schon der Inhalt des aus dem Empfangs-Sendegerät 2, nämlich der Codierung des Werkzeuges W2 gewonnenen Signals gleich dem Inhalt des vom Rechner gesetzten Signals S2, sodaß jetzt am Aufnahmeplatz A1 eine Kennung erzeugt wird, die dem Werker anzeigt, daß das für den zweiten Arbeitsgang vorgesehene Werkzeug das sich im Aufnahmeplatz A1 befindliche Werkzeug W2 ist, sodaß er das Werkzeug W2 entnehmen und den zweiten Arbeitsgang mit dem Werkzeug W2 durchführen kann.

Hat der Werker nach Beendigung des ersten Arbeitsganges das Werkzeug W1 am Aufnahmeplatz A2 abgelegt, so erkennt der Rechner beim weiteren Ablauf der Suchroutine, daß sich im Aufnahmeplatz A2 jetzt ein Werkzeug mit einer von der Codierung des Werkzeuges W2 abweichenden Codierung befindet. Da bei der Abfrage des Aufnahmeplatzes A3 wiederum ein Leercode erzeugt wird, erkennt der der Rechner erneut, daß sich im Aufnahmeplatz A3 auch jetzt kein Werkzeug befindet. Bei der folgenden Abfrage des Aufnahmeplatzes A4 erkennt der Rechner wiederum, daß sich in diesem ein Werkzeug mit einer von der Codierung des Werkzeuges W2 abweichenden Codierung befindet.

Hat der Werker beim Zurücklegen des Werkzeuges W1 in das Werkzeugmagazin das Werkzeug W1 nicht am Aufnahmeplatz A2, sondern am Aufnahmeplatz A3 abgelegt, so liest das Lesegerät 3, da sich im Aufnahmeplatz 2 kein Werkzeug und damit auch kein Empfangs-Sendegerät 2 befindet, für den Aufnahmeplatz A2 einen Leercode aus, bei dessen Weitergabe an den Rechner dieser erkennt, daß sich im Aufnahmeplatz A2 kein Werkzeug befindet.
Bei der Vervollständigung dieser Suchroutine liest das Lesegerät 3 bei den aufeinanderfolgenden Abfragen der Aufnahmeplätze A3 und A4 die den Werkzeugen W1 und W3 zugehörigen Informationen aus, deren Signale im Rechner mit dem von ihm gesetzten zweiten Signal S2 aufeinanderfolgend verglichen werden, wobei er erkennt, daß es sich bei den in den Aufnahmeplätzen A3 und A4 befindlichen Werkzeugen um solche handelt, deren Codierung von der Codierung des Werkzeuges W2 abweicht.
Auch hier wird die Suchroutine während der Durchführung des zweiten Arbeitsganges bei im Rechner gesetztem zweiten Signal S2 ständig weitergeführt, sodaß die am ersten Aufnahmeplatz A1 erzeugte Kennung für das Werkzeug W2 erhalten bleibt und der zweite Arbeitsgang mit gesetz-tem Signal 2 zu Ende geführt werden kann.

Für die Durchführung des Arbeitsganges 3 bringt der Werker zunächst das seither benutzte Werkzeug W2 wieder in das Werkzeugmagazin 1 zurück, wozu ihm die Aufnahmeplätze A1 und A2 zur freien Verfügung stehen. Hierzu wird davon ausgegangen, daß er das Werkzeug W2 im Aufnahmeplatz A2 ablegt, sodaß der Aufnahmeplatz A1 frei bleibt, und der Aufnahmeplatz A3 mit dem Werkzeug W1 bestückt ist, während das Werkzeug W3 sich im Aufnahmeplatz A4 befindet.

Da für den Arbeitsgang 3 das Werkzeug W3 zum Einsatz kommen soll, setzt der Rechner zunächst ein dem Werkzeug W3 entsprechendes Signal S3. Bei der Abfrage des Aufnahmeplatzes A1 der folgenden Suchroutine wird, da sich an diesem kein Werkzeug befindet, ein Leercode erzeugt, der mit dem im Rechner erzeugten Signal S3 verglichen wird, wobei der Rechner erkennt, daß sich im Aufnahmeplatz A1 kein Werkzeug befindet. Bei den folgenden Abfragen der Aufnahmeplätzte A2 und A3 erkennt der Rechner, daß sich in beiden Aufnahmeplätzen A2 und A3 zwar jeweils ein Werkzeug befindet, deren Codierungen aber nicht dem Inhalt des gesetzten Signals 3 entsprechen. Beim Vergleich des Inhaltes der bei der Abfrage des Aufnahmeplatzes A4 erhaltenen Information mit dem noch immer gesetzten Signal 3 stellt der Rechner Übereinstimmung der Signale fest und erkennt damit das Werkzeug W3. Der Rechner erzeugt jetzt am Aufnahmeplatz A4 wiederum eine Kennung, die dem Werker anzeigt, daß das für den Arbeitsgang 3 geforderte Werkzeug W3 sich im Aufnahmeplatz A4 befindet. Da der Rechner gleichzeitig den Start für den Arbeitsgang 3 freigibt, kann der Werker den Arbeitsgang 3 mit dem erkannten Werkzeug W3 starten und durchführen.
Im Werkzeugmagazin sind dann die beiden Aufnahmeplätze A1 und A4 frei.

Sofern der Werker nach Durchführung des Arbeitsganges 3 das Werkzeug W3 am Aufnahmeplatz A1 abgelegt hat, hat während der Durchführung der drei Arbeitsgänge jedes der Werkzeuge W1, W2 und W3 mindestens ein Mal seinen Aufnahmeplatz gewechselt.

Vorstehende Ausführungen zeigen, daß es mit der erfindungsgemäßen Lösung ohne Kenntnis des jeweiligen momentanen Aufnahmeplatzes der einzelnen Werkzeuge W1, W2 und W3 möglich ist -ausgehend von einer regellosen Zufallsverteilung der Werkzeuge innerhalb des Werkzeugmagazins- das für den jeweiligen Arbeitsgang vorgesehene Werkzeug zu erkennen und dem Werker den jeweiligen momentanen Aufnahmeplatz der Werkzeuge W1, W2 und W3 in der vom Rechner vorgegebenen Reihenfolge zur Entnahme kenntlich zu machen, wobei es absolut gleichgültig ist, an welchem Aufnahmeplatz der Werker das jeweils vorhergehend benutzte Werkzeug nach Beendigung des entsprechenden vorherigen Arbeitsganges ablegt hat.

Da die Durchführung der Abfrage eines Aufnahmeplatzes im Milli-Sekundenbereich liegt, ist offensichtlich, daß die Anzahl der in einem Werkzeugmagazin vorhandenen Aufnahmeplätze, sowie der in diesen gleichzeitig aufgenommenen Werkzeuge insoweit keine Rolle spielt, als der Rechner schon unmittelbar nach Beendigung eines Arbeitsganges das entsprechende Signal S für die erste Abfrage zum Auffinden des nächstfolgenden Werkzeuges setzen kann.

Nachdem es trotz größter Sorgfalt des Werkers vorkommen kann, daß er sich bei der Entnahme des für den nächsten Arbeitsgang vorgesehenen Werkzeuges vergreift, oder er den Wechsel des Werkzeuges für den nächsten Arbeitsgang vollends vergißt, ist in Weiterbildung der Erfindung vorgesehen, daß nach Kennzeichnung des Aufnahmeplatzes, aus dem das Werkzeug für den nächsten Arbeitsgang entnommen werden soll, durch den Rechner kontrolliert wird, ob einerseits tatsächlich ein Werkzeug aus dem Werkzeugmagazin entnommen ist, und ob andererseits das entnommene Werkzeug auch das für den nächsten Arbeitsgang vorgesehene Werkzeug ist.

Hierbei wird zunächst davon ausgegangen, daß das zu entnehmende Werkzeug das Werkzeug W3 ist, das sich am Aufnahmeplatz A4 befand. Demnach sind die Aufnahmeplätze A1 und A4 leer, während sich im Aufnahmeplatz A2 das Werkzeug W2 und im Aufnahmeplatz A3 das Werkzeug W1 befindet.

Da entsprechend der eingangs beschriebenen Ausgangssituation die Werkzeuge W1, W2 und W3 im Werkzeugmagazin 1 auf die 4 Aufnahmeplätze verteilt waren, ergibt sich, daß nach Entnahme des Werkzeuges W3 insgesamt zwei Aufnahmeplätze frei sein müssen, und das Werkzeug W3 sich nicht mehr im Werkzeugmagazin 1 befinden darf.

Zur Feststellung, ob der Werker tatsächlich das Werkzeug W3 entnommen hat, müssen nach der Entnahme des Werkzeuges W3 insgesamt 2 leere Aufnahmeplätze erkannt werden.

Zur Durchführung der Mengen-Kontrollroutine werden, ebenso wie zur Identifikation der einzelnen Werkzeuge wieder alle vier Aufnahmeplätze des Werkzeugmagazins aufeinanderfolgend überprüft.
Beim Auslesen des leeren Aufnahmeplatzes A1 des Werkzeugmagazins 1 durch das Lesegerät 3 erhält dieses einen Leercode, der an den Rechner weitergeleitet wird. Da der Leercode mit dem vom Rechner erwarteten ersten Signal L0 übereinstimmt, erkennt der Rechner, daß im Aufnahmeplatz A1 kein Werkzeug vorhanden ist und setzt das erste der beiden Signale L0. Beim Auslesen der Codierungen der in den Aufnahmeplätzen A2 und A3 aufgenommenen Werkzeuge erhält der Rechner über das Lesegerät 3 jeweils eine Information, die mit der dem Signal L0 zugrunde liegenden Information nicht übereinstimmt. Daher erkennt der Rechner zwar, daß sich in beiden Aufnahmeplätzen A2 und A3 jeweils ein Werkzeug befindet, jedoch vermag er dabei nicht zu erkennen, um welche beiden Werkzeuge es sich hierbei handelt. Beim Auslesen des Aufnahmeplatzes A4 wird dem Rechner vom Lesegerät 3 wiederum ein Leercode übermittelt, bei dessen Vergleich mit dem erwarteten zweiten Signal L0 der Rechner erkennt, daß sich im Aufnahmeplatz A4 kein Werkzeug befindet; daher setzt er auch das zweite Signal L0.
Nachdem nach Abfrage aller Aufnahmeplätze feststeht, daß von den insgesamt vier Aufnahmeplätzen zwei Aufnahmeplätze frei sind, ist hiervon abzuleiten, daß eines der insgesamt 3 Werkzeuge entnommen ist, sodaß jetzt noch zu prüfen ist, ob tatsächlich das Werkzeug W3 oder an dessen Stelle ein anderes Werkzeug entnommen wurde.

Hierzu wird eine zweite Kontrollroutine durchgeführt, wozu im Rechner ein Signal gesetzt wird, dessen Information der Codierung bzw Information desjenigen Werkzeuges entspricht, das vom Werker hätte entnommen werden sollen. Nachdem dies vorliegend das Werkzeug W3 ist, und dies dem Rechner aufgrund des Inhaltes des abzuarbeitenden Schraubprogrammes bekannt ist, setzt der Rechner für diese Kontrollroutine das Signal S3.

Zur Durchführung dieser Kontrollroutine werden, ebenso wie zur Identifikation der einzelnen Werkzeuge, wieder alle vier Aufnahmeplätze des Werkzeugmagazins aufeinanderfolgend überprüft.
Beim Auslesen des leeren Aufnahmeplatzes A1 des Werkzeugmagazins durch das Lesegerät 3 erhält dieses einen Leercode, der an den Rechner weitergeleitet wird. Der Rechner vermag dem Leercode hinsichtlich der Werkzeugidentifikation keine Informationen zu entnehmen. Das Signal S3 bleibt gesetzt.
Nach Auslesen der Codierung des im Aufnahmeplatz A2 aufgenommenen Werkzeuges und Weiterleitung der Information an den Rechner, vergleicht dieser diese Information mit dem Inhalt des von ihm gesetzten Signals S3 und stellt fest, daß die jetzt ausgelesene Codierung nicht mit der Codierung des Werkzeuges W3 übereinstimmt. Das Signal S3 bleibt daher weiterhin gesetzt.
Nach Auslesen der Codierung des im Aufnahmeplatz A3 aufgenommenen Werkzeuges und Weiterleitung der Information an den Rechner vergleicht dieser diese Information ebenfalls mit dem Inhalt des von ihm gesetzten Signals S3 und stellt fest, daß auch die jetzt ausgelesene Codierung nicht mit der Codierung des Werkzeuges 3 übereinstimmt. Das Signal S3 bleibt daher auch weiterhin gesetzt.
Beim Auslesen des leeren Aufnahmeplatzes A4 des Werkzeugmagazins durch das Lesegerät 3 erhält dieses wieder einen Leercode, der an den Rechner weitergeleitet wird. Der Rechner vermag dem Leercode hinsichtlich der Werkzeugidentifikation keine Informationen zu entnehmen. Das Signal S3 bleibt deshalb weiterhin gesetzt.
Nachdem beim Vergleich der Codierungen der beiden in den Aufnahmeplätzen A2 und A3 aufgenommenen Werkzeuge mit der dem Signal S3 zugrunde liegenden Codierung keine Übereinstimmung festgestellt werden konnte, ergibt sich, daß keines der beiden sich in den Aufnahmeplätzen A2 und A3 befindlichen Werkzeuge (W1 und W2) das Werkzeug W3 sein kann.

Da einerseits bei der Mengen-Kontrollroutine genau zwei leere Aufnahmeplätze, nämlich die Aufnahmeplätze A1 und A4 festgestellt wurden, und sich das Werkzeug W3 in keinem der belegten Aufnahmeplätze A2 und A3 befindet, ergibt sich zwangsweise, daß sich das Werkzeug W3 nicht im Werkzeugmagazin 1 befindet, es also vom Werker tatsächlich entnommen wurde.

Hätte der Werker zur Durchführung des Arbeitsganges 3 das Werkzeug W3 nicht entnommen und wäre dieses im Werkzeugmagazin verblieben, so hätte der Rechner bei dem aufeinanderfolgenden Abfragen sämtlicher Aufnahmeplätze A1 bis A4 zumindest bei einem dieser Aufnahmeplätze eine der Codierung des Werkzeuges W3 entsprechende Codierung ermittelt, wodurch das Signal S3 gelöscht, eine Fehlermeldung angezeigt und der Maschinenstart verhindert worden wäre. Mit den beiden Kontrollroutinen kann somit auch zweifelsfrei festgestellt werden, ob nur ein bestimmtes, nämlich das für die Durchführung eines Arbeitsganges vorgesehene Werkzeug entnommen wurde und ob es entsprechend dem Ergebnis der Suchroutine vom Werker auch in Bezug auf den entsprechenden Arbeitsgang zum richtigen Zeitpunkt dem Werkzeugmagazin entnommen wurde.

## Patentansprüche

1. Vorrichtung zur Aufnahme und Erkennung von Werkzeugen für Bearbeitungsmaschinen mit einem die Aufeinanderfolge der einzelnen Bearbeitungsvorgänge bestimmenden Rechner und einem ortsfesten Lesegerät zum Auslesen der Codierungen von in Aufnahmeplätzen eines Werkzeugmagazins aufgenommenen Werkzeugen, wobei der Rechner nach Auswahl eines Bearbeitungsprogrammes die Reihenfolge des Einsatzes der einzelnen Werkzeuge vorgibt,
**dadurch gekennzeichnet, daß**
die Codierungen der Werkzeuge in jeweils einem mit dem Werkzeug verbundenen Empfangs-Sendegerät (2) enthalten sind und sämtlichen Empfangs-Sendegeräten (2) ein einziges Lesegerät (3) mit nur einem Antennenanschluß (4) zugeordnet ist, der aufeinanderfolgend mit den Aufnahmeplätzen (A1, Ax) zugeordneten Antennen (5) wirkungsmäßig verbindbar ist, um aufeinanderfolgend die Codierungsinhalte der Empfangs-Sendegeräte (2) durch das Lesegerät (3) auszulesen und diese dem Rechner zum Vergleich mit dem Codierungsinhalt des von ihm vorgegebenen Werkzeuges zuzuführen, wobei der Rechner bei Übereinstimmung des Codierungsinhaltes des vorgegebenen Werkzeuges mit einem der ihm zugeführten Codierungsinhalte der Empfangs-Sendegeräte (2) am Aufnahmeplatz des diesen Codierungsinhalt aufweisenden Empfangs-Sendegerätes (2) eine Kennung erzeugt.

2. Vorrichtung nach Anspruch 1, **dadurch gekennzeichnet, daß** der Rechner die Reihenfolge des Auslesens der Codierungsinhalte der Empfangs-Sendegeräte (2) vorgibt.

3. Vorrichtung nach Anspruch 1, **dadurch gekennzeichnet, daß** das aufeinanderfolgende Auslesen der Empfangs-Sendegeräte (2) aller von den Aufnahmeplätzen des Werkzeugmagazins aufgenommenen Werkzeuge im Rahmen einer sich ständig wiederholenden Suchroutine erfolgt, deren Wiederholungsfrequenz durch den Rechner bestimmbar ist.

4. Vorrichtung nach Anspruch 3, **dadurch gekennzeichnet, daß** die Wiederholung der Suchroutine nahezu so lange erfolgt, bis der mit dem ermittelten Werkzeug durchzuführende Arbeitsgang beendet ist.

5. Vorrichtung nach Anspruch 1, **dadurch gekennzeichnet, daß** nach Entnahme des vom Rechner vorgegebenen Werkzeuges aus dem Werkzeugmagazin aufeinanderfolgend die Empfangs-Sendegeräte (2) aller sich noch im Werkzeugmagazin befindlichen Werkzeuge durch das Lesegerät (3) erneut ausgelesen und die ausgelesenen Codierungsinhalte aller Empfangs-Sendegeräte (2) dem Rechner zum Vergleich mit dem Codierungsinhalt des von ihm vorgegebenen Werkzeuges zugeführt werden, wobei der Rechner bei Übereinstimmung des Codierungsinhaltes des vorgegebenen Werkzeuges mit einem ihm zugeführten Codierungsinhalt eines Empfangs-Sendegerätes (2) eine Fehlermeldung am Aufnahmeplatz des diesen Codierungsinhalt aufweisenden Empfangs-Sendegerätes (2) oder an einer anderen Stelle im Bereich der Bearbeitungsmaschine erzeugt.

6. Vorrichtung nach Anspruch 5, **dadurch gekennzeichnet, daß** das aufeinanderfolgende Auslesen der Empfangs-Sendegeräte (2) aller im Werkzeugmagazin verbliebenen Werkzeuge im Rahmen einer sich ständig wiederholenden ersten Kontrollroutine erfolgt, deren Wiederholungsfrequenz durch den Rechner bestimmbar ist.

7. Vorrichtung nach Anspruch 5, **dadurch gekennzeichnet, daß** der Rechner die Fehlermeldung als Stillsetzsignal für die Bearbeitungsmaschine an deren Steuerung leitet.

8. Vorrichtung nach Anspruch 1, **dadurch gekennzeichnet, daß** nach Entnahme des vom Rechner vorgegebenen Werkzeuges aus dem Werkzeugmagazin aufeinanderfolgend alle Aufnahmeplätze des Werkzeugmagazins durch das Lesegerät (3) ausgelesen und alle ausgelesenen Informationen dem Rechner zugeführt werden, wobei dieser dann, wenn er keine von einem Empfangs-Sendegerät (2) eines Werkzeuges stammende Information (Leercode) enthält, ein Signal setzt und nach der letzten Information die Anzahl der erhaltenen Leeercodes mit einer vorbestimmten Anzahl von Leeercodes vergleicht, um dann ein Fehlersignal zu setzen, wenn die Anzahl der erhalteten Leeercodes deren vorbestimmte Anzahl übersteigt.

9. Vorrichtung nach Anspruch 8, **dadurch gekennzeichnet, daß** das aufeinanderfolgende Auslesen aller Aufnahmeplätze im Rahmen einer sich ständig wiederholenden zweiten Kontrollroutine erfolgt, deren Wiederholungsfrequenz durch den Rechner bestimmbar ist.

10. Vorrichtung nach Anspruch 6 und 9, **dadurch gekennzeichnet, daß** der Rechner die beiden Kontrollroutinen abwechselnd durchführt.

## Claims

1. A device for receiving and detecting tools for manufacturing machines with a computer determining the sequence of the individual machining processes and a fixed reader for reading the codings of tools received in receiving slots of the a tool magazine, the computer predetermining the sequence of use of the individual tools after a machining programme is selected,
**characterised in that**
the codings of the tools are each contained in a transceiver (2) connected to the tool and **in that** a single reader (3), with only one antenna connection (4), is assigned to all the transceivers (2), which reader can be effectively connected one after the other to the antennae (5) assigned to the receiving slots (4) in order to read the coding contents successively by means of the reader (3) and feed them to the computer for comparison with the coding content of the tool predetermined by it, wherein the computer generates an identification if the coding content of the predetermined tool coincides with one of the coding contents fed to it by the transceivers (2) on the receiving slot of the transceiver (2) having this coding content.

2. The device according to Claim 1, **characterised in that** the computer predetermines the sequence of reading of the coding contents of the transceivers (2).

3. The device according to Claim 1, **characterised in that** the successive reading of the transceivers (2) of all the tools received by the receiving slots of the tool magazine takes place within a constantly recurring search routine, the repetition frequency of which can be predetermined by the computer.

4. The device according to Claim 3, **characterised in that** the repetition of the search routine takes place almost until the operation to be carried out with the determined tool is completed.

5. The device according to Claim 1, **characterised in that** the transceivers (2) of all the tools still present in the tool magazine are read again after the tool predetermined by the computer is removed from the tool magazine, and **in that** read coding contents of all the transceivers (2) are fed to the computer for comparison with the coding content of the tool predetermined by it, whereby the computer, if the coding content of the predetermined tool coincides with a coding content of a transceiver (2) fed to it, generates an error message at the receiving slot of the transceiver (2) having this coding content, or any other point within the region of the manufacturing machine.

6. The device according to Claim 5, **characterised in that** the successive reading of the transceivers (2) of all the tools remaining in the tool magazine takes place within a first constantly repeating first check routine whose repetition frequency can be determined by the computer.

7. The device according to Claim 5, **characterised in that** the computer transmits the error message as a stop signal for the manufacturing machine to its control system.

8. The device according to Claim 1, **characterised in that** all the receiving slots of the tool magazine are read in succession by the reader (3), after the tool predetermined by the computer has been removed from the tool magazine, and all the information is fed to the computer, wherein the computer, when it contains no information (blank code) deriving from a transceiver (2) of a tool, sets a signal and compares, based on the last information, the number of blank codes in order then to set an error signal if the number of blank codes received exceeds their predetermined number.

9. The device according to Claim 8, **characterised in that** the successive reading of all the receiving slots takes place within a constantly repeating second check routine whose frequency can be determined by the computer.

10. The device according to Claim 6 and 9, **characterised in that** the computer carries out both check routines alternately.

## Revendications

1. Dispositif permettant le logement et la détection d'outils pour machines d'usinage, équipé d'un ordinateur déterminant l'ordre des différents processus d'usinage et d'un lecteur fixe permettant la lecture des codes des outils logés aux différents emplacements d'un magasin d'outils, l'ordinateur déterminant l'ordre d'utilisation des différents outils en fonction du programme d'usinage choisi,
**se caractérisant par le fait que**
les codes des outils sont enregistrés dans un appareil récepteur émetteur (2) raccordé à l'outil et qu'un seul lecteur (3), doté d'une seule prise d'antenne (4), est affecté à l'ensemble des appareils récepteurs émetteurs (2), cette prise pouvant être raccordée à son tour en fonction de l'effet souhaité aux antennes (5) affectées aux emplacements (A1, Ax) afin que le lecteur (3) lise ensuite le code des appareils récepteurs émetteurs (2) et les transmette à l'ordinateur afin qu'il les compare au code de l'outil qu'il a lui-même indiqué et que le code de l'outil indiqué correspond à un des codes envoyés à l'ordinateur par les appareils récepteurs émetteurs (2), l'ordinateur produit un signal identifiable à l'emplacement de l'appareil émetteur récepteur (2) indiquant ce code.

2. Dispositif conforme à la revendication 1 **se caractérisant par le fait que** l'ordinateur indique l'ordre de lecture des codes des appareils récepteurs émetteurs (2).

3. Dispositif conforme à la revendication 1 **se caractérisant par le fait que** la lecture qui s'ensuit par les appareils récepteurs émetteurs (2) de tous les outils logés dans le magasin d'outils se fait dans le cadre d'un programme de recherche récurrent dont la fréquence peut être déterminée par l'ordinateur.

4. Dispositif conforme à la revendication 3 **se caractérisant par le fait que** le programme de recherche recommence quasiment jusqu'à ce que l'opération à exécuter avec l'outil déterminé soit terminée.

5. Dispositif conforme à la revendication 1 **se caractérisant par le fait que** juste après l'enlèvement du magasin d'outils de l'outil indiqué par l'ordinateur, le lecteur (3) fait une nouvelle lecture des appareils récepteurs émetteurs (2) de tous les outils se trouvant encore dans le magasin et que les codes lus de tous les appareils récepteurs émetteurs (2) sont envoyés à l'ordinateur afin qu'il les compare au code de l'outil qu'il a lui-même indiqué. Si le code de l'outil indiqué correspond à un des codes envoyés à l'ordinateur par un appareil récepteur émetteur (2), l'ordinateur génère un message d'erreur à l'emplacement de l'appareil récepteur émetteur (2) indiquant ce code ou à un autre endroit dans la zone de la machine d'usinage.

6. Dispositif conforme à la revendication 5 **se caractérisant par le fait que** la lecture qui s'ensuit des appareils récepteurs émetteurs (2) de tous les outils restés dans le magasin se fait dans la cadre d'un premier programme de contrôle récurrent dont la fréquence de reprise peut être déterminée par l'ordinateur.

7. Dispositif conforme à la revendication 5 **se caractérisant par le fait que** l'ordinateur transmet le message d'erreur à la commande de la machine d'usinage sous forme de signal d'arrêt de cette dernière.

8. Dispositif conforme à la revendication 1 **se caractérisant par le fait que** juste après l'enlèvement du magasin d'outils de l'outil indiqué par l'ordinateur, le lecteur (3) lit tous les emplacements du magasin et envoie toutes les informations collectées à l'ordinateur qui, s'il ne contient pas d'information (code lecteur) émanant de l'appareil récepteur émetteur (2) d'un outil, génère un signal et, après la dernière information, compare le nombre de codes lecteur reçus à un nombre prédéterminé de codes lecteur afin de générer ensuite un signal d'erreur si le nombre de codes lecteur reçu dépasse le nombre préréglé.

9. Dispositif conforme à la revendication 8 **se caractérisant par le fait que** la lecture qui s'ensuit de tous les emplacements se fait dans le cadre d'un deuxième programme de contrôle récurrent dont la fréquence de reprise peut être déterminée par l'ordinateur.

10. Dispositif conforme aux revendications 6 et 9 **se caractérisant par le fait que** l'ordinateur exécute les deux programmes de contrôle en alternance.
